Europäisches Patentamt

European Patent Office

Office européen des brevets

(19)

(11) Veröffentlichungsnummer: **0 202 481**
**A2**

(12) **EUROPÄISCHE PATENTANMELDUNG**

(21) Anmeldenummer: 86105392.4

(22) Anmeldetag: 18.04.86

(51) Int. Cl.⁴: **F16L 33/26**

(30) Priorität: 23.05.85 DE 3518577

(43) Veröffentlichungstag der Anmeldung:
26.11.86 Patentblatt 86/48

(84) Benannte Vertragsstaaten:
AT BE CH DE FR GB IT LI LU NL SE

(71) Anmelder: **BOA A.G. Luzern**
**Kellerstrasse 45**
**CH-6002 Luzern(CH)**

(72) Erfinder: **Marti, Wilhelm**
**Rosenfeldweg 12**
**CH-6048 Horw(CH)**
Erfinder: **Kreis, Peter**
**Geissensteinring 46**
**CH-6005 Luzern(CH)**

(74) Vertreter: **Blum, Rudolf Emil Ernst et al**
**c/o E. Blum & Co Patentanwälte Vorderberg**
**11**
**CH-8044 Zürich(CH)**

(54) **Endpartie eines Metallschlauches.**

(57) Der Metallschlauch (3) weist ein Wellrohr (2) und einen Schutzschlauch (8) aus einem Metallgeflecht auf. Das Wellrohr (2) mit dem Schutzschlauch (8) sind zwischen einem äusseren Pressring (4) und einem inneren Pressring (5) plastisch verformt gehalten. Der äussere Pressring (4) ist in radialer Richtung einwärts zusammengedrückt und der innere Pressring (5) ist ausgeweitet. Somit ist eine kraft-und formschlüssige Verbindung bei der Endpartie, enthaltend den äusseren Pressring (4), einen Endabschnitt des metallischen Endrohres (2), einen Endabschnitt des metallischen Schutzschlauches (8) und den inneren Pressring (5) vorhanden. Es liegt folglich ein rohrförmiger, starrer Schichtkörper vor, der mit einem Rohrverbindungsstück (1) stoffschlüssig verbunden werden kann. Damit ist eine kostengünstige und zeitsparende Herstellung der Endpartien von Metallschläuchen vorhanden.

Fig. 1

Endpartie eines Metallschlauches

Die Erfindung betrifft eine zum Verbinden mit einem starren Gegenstück bestimmte Endpartie eines biegsamen, mindestens ein metallisches Wellrohr enthaltenden Metallschlauches.

Solche biegsame Metallschläuche werden beispielsweise in Form eines Wellrohres hergestellt. Auch sind Ausführungen erhältlich, bei denen das Wellrohr, bzw. die Wellrohre von einem Schutzschlauch z.B. in Form eines Metallgeflechtes umgeben ist bzw. sind. Um einen solchen Metallschlauch mit einem starren Bauteil, beispielsweise einem Flanschen, Stutzen oder einem Rohr insbesondere fluiddicht verbinden zu können, wird bekanntlich am schlaffen Teil, beispielsweise dem Wellrohr ein Ring, ein Flansch usw. aufgebracht, üblicherweise durch eine Stumpfschweissung. Die dazu notwendigen Vorbereitungen am Schlauchende und die Verbindungsarbeiten, beispielsweise die Schweissarbeiten sind bis jetzt aufgrund des genannten Vorgehens von Hand erfolgt und sind dementsprechend zeit-und kostenaufwendige Anfertigungen gewesen. Beim Verschweissen eines Wellrohres und gegebenenfalls des ihn umgebenden metallenen Schutzgewebes mit dem starren Ring kann das bekannte Zurückziehen der - schmelzflüssig erwärmten Endabschnitte des Wellrohres und gegebenenfalls des Schutzschlauches auftreten, so dass das Beibehalten der Massgenauigkeit, also Länge des schlussendlich erzeugten Metallschlauches und auch der Dichte der Verbindungsstelle grosse Aufmerksamkeit geschenkt werden musste.

Hier will die Erfindung Abhilfe schaffen. Die Erfindung, wie sie in den Ansprüchen gekennzeichnet ist, löst die Aufgabe, eine zum Verbinden mit einem starren Gegenstück bestimmte Endpartie eines biegsamen, mindestens ein metallisches Wollrohr enthaltenden Metallschlauch zu schaffen, welche ein starrer Schichtkörper ist, welche sich wie ein starres, maschinell bearbeitbares Rohrstück verhält.

Die durch die Erfindung erreichten Vorteile sind im wesentlichen darin zu sehen, dass keine manuelle Bearbeitungen notwendig sind, um die Endpartie zum stoffschlüssigen Verbinden mit Rohranschlussstücken, seien dies Flansche oder Gewindestücke, vorzubereiten. Die Lagerhaltung von Metallschläuchen wird sehr vereinfacht, weil sie ohne mit Rohranschlussstücken versehen sein zu müssen, hergestellt, versandt und gelagert werden können, und erst in der endgültigen Anwendung mit einem zweckgebundenen Rohranschlussstück verbunden werden kann, welches Verbinden ausschliesslich maschinell durchgeführt werden kann.

Im folgenden wird die Erfindung anhand von lediglich einem Ausführungsweg darstellenden Zeichnungen näher erläutert. Es zeigt

Figur 1 einen Schnitt durch eine Endpartie eines erfindungsgemässen Metallschlauches, die an einen mit einem Flansch ausgerüsteten Rohrverbinder angeschweisst ist, und

Figur 2 eine schaubildliche Ansicht einer mit einem Rohrverbinder verschweissten erfindungsgemässen Endpartie.

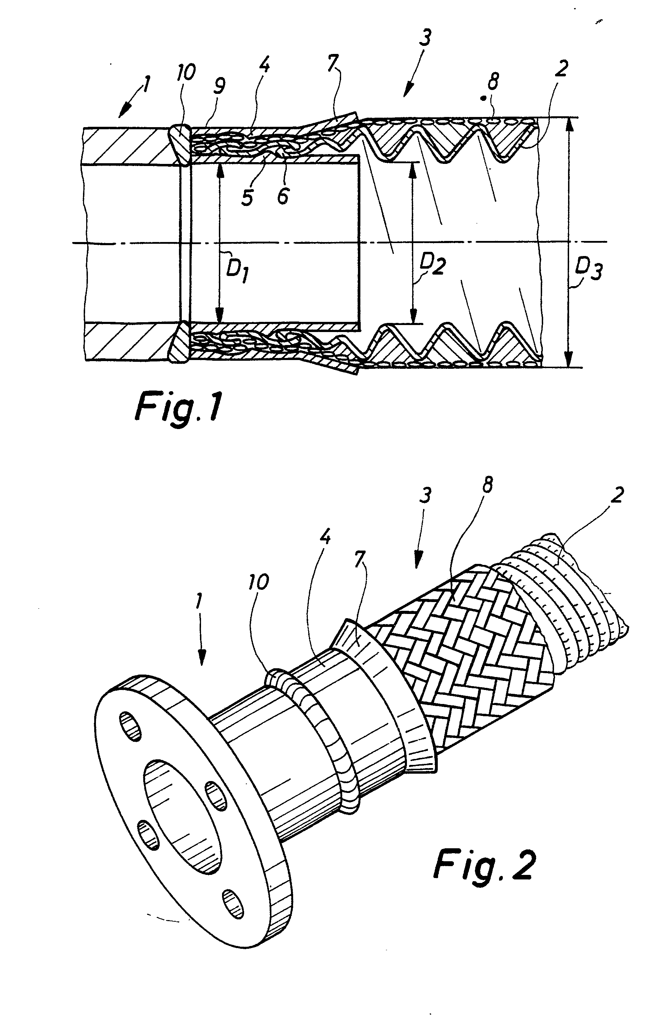

Die in der Figur 1 gezeigte Ausführung enthält einen Metallschlauch 3, der von einem metallischen Wellrohr 2 gebildet ist, welches von einem Schutzschlauch 8 in Form eines Metallgeflechtes umgeben ist. Die Herstellung von metallischen Wellrohren 2 mit geflochtenem Schutzschlauch 8 ist allgemein bekannt und muss somit nicht im einzelnen beschrieben werden. Das äusserste Ende des Metallschlauches 3 ist von einem äusseren Pressring 4 umgeben. Dieser äussere Pressring 4 weist einen koaxial zum Metallschlauch 3 verlaufenden zylindrischen Abschnitt 9 und einen daran anschliessenden, beim von der Stirnseite des äusseren Pressringes 4 abgekehrten Ende gelegenen trompetenförmig erweiterten Abschnitt 7 auf. Weiter ist ein innerer Pressring 5 vorhanden. Der Innendurchmesser $D_1$ des inneren Pressringes 5 ist angenähert gleich der Nennweite $D_2$ des Wellrohres 2. Die Wellen 6 des zwischen dem äusseren Pressring 4 und inneren Pressring 5 gelegenen Abschnittes des Wellrohres 2 sind plastisch verformt zusammengepresst und auch die Filamente des Geflechts des Schutzschlauches 8 sind ebenfalls in diesem Ringraum plastisch verformt.

Sowohl der äussere Pressring 4 als auch der innere Pressring 5 sind enebfalls plastisch verformt.

Zum Aufbringen des äusseren Pressringes 4 wird ein Ring gewählt, dessen Innendurchmesser einwenig grösser ist als der Aussendurchmesser $D_3$ des nichtverformten Metallschlauches 3. Darauf wird der Ring in radialer Richtung zusammengepresst, so dass, wie aus der Fig. 1 ersichtlich ist, sein Aussendurchmesser nun ungefähr dem Aus-

sendurchmesser $D_3$ des Metallschlauches 3 entspricht. Dabei werden die Wellen 6 des Endes des Wellrohres 2 plastisch verformt und auch das Metallgeflecht des Schutzschlauches 8 verformt.

Der innere Pressring 5 weist vor seinem Einschieben in den Metallschlauch 3 offensichtlich einen Aussendurchmesser auf, der etwas kleiner als die Nennweite $D_2$ des Wellrohres 2 ist. Nach dem Einschieben wird dieser innere Pressring 5 in radialer Richtung aufgeweitet und gleichzeitig der äussere Pressring 4 zu seiner endgültigen Form, wie in der Fig. 1 gezeigt ist, plastisch verformt. Dabei wird der innere Pressring 5 um ein solches Mass ausgeweitet, dass sein Innendurchmesser $D_1$ angenähert gleich der genannten Nennweite $D_2$ ist.

Wie aus der Figur 1 ersichtlich ist, sind somit die Wellen 6 des Endes des Wellrohres 2 plastisch verformt, zusammengepresst worden. Das Metallgeflecht des Schutzschlauches 8 ist ebenfalls in diesem Abschnitt verformt. Dadurch, dass gleichzeitig ein Zusammenpressen des äusseren Pressringes 4 und ein Ausweiten des inneren Pressringes 5 stattfindet, üben die Filamente des Schutzschlauches 8 auf dem Innenmantel des äusseren Pressringes 4 und die Wellen 6 des Wellrohres 2 auf dem Aussenmantel des inneren Pressringes 5 Gegenkräfte aus. Damit werden die genannten Mantelabschnitte der Pressringe weiter plastisch verformt, indem die genannten Filamente bzw. Wellen sich zum Teil in den betreffenden Mantelflächen eingraben. Somit entsteht eine form- und kraftschlüssige Verbindung zwischen den Ringen und den Schlauchelementen. Zusätzlich ist zu erwähnen, dass durch gegenseitiges plastisches Verformen eine kraftschlüssige Verbindung zwischen dem Gewebe und den Wellen stattfindet. Von der Stirnseite her zeigt sich nun diese Endpartie als rohrförmiger Schichtkörper. Die Stirnseite dieses starren Schichtkörpers lässt sich nun spanabhebend bearbeiten, abgraten und, falls notwendig kann ein Teil der Endpartie abgelängt werden, um eine festgelegte Länge des gesamten Metallschlauches zu erhalten. Die Endpartie kann somit als starres Rohrstück betrachtet und bearbeitet werden.

An der genannten Stirnseite lässt sich nun ein Rohrverbindungsstück 1 ansetzen, wobei irgendwelche stoffschlüssige Verbindung ausgeführt werden kann. Im gezeigten Beispiel ist eine Verschweissung mit der Schweissnaht 10 dargestellt. Je nach vorhandenen Werkstoffen kann hier auch ein Löten, ein Hartlöten oder auch ein Kleben stattfinden. Es ist offensichtlich, dass weil die plastische verformte Endpartie als starres Rohrstück vorliegt, ein solches Verbinden maschinell vor sich gehen kann. Da Ausführungen denkbar sind, bei denen nur die Pressringe 4,5 aus einem mit dem Rohrverbindungsstück 1 verschweissbaren Werkstoff vorliegen, jedoch der Schutzschlauch 8 und/ oder das Wellrohr 2 aus einem nicht stoffschlüssig verbindbaren Werkstoff sind, genügt in einem solchen Fall lediglich die zwei Pressringe 4,5 mit dem Rohrverbindungsstück 1 zu verschweissen oder zu verbinden. Durch die oben beschriebene plastische Verformung aller Teile sind das Wellrohr 2 und der Schutzschlauch 8 derart kraftschlüssig zwischen den Pressringen 4,5 gehalten, dass es nicht immer notwendig ist, die stoffschlüssige Verbindung zum Rohrverbindungsstück 1 in bezug auf diese Teile des Metallschlauches 3 zu erstellen.

In der Figur 2 ist schaubildlich ein Metallschlauch 3 mit einem Schutzschlauch 8 aus einem Metallgeflecht und einem metallischen Wellrohr 2 gezeichnet. Auch ist der äussere Pressring 4 mit dem trompetenförmigen Ringendabschnitt 7 gezeigt. Diese Endpartie ist nun über eine Schweissnaht 10 mit einem Rohrverbindungsstück 2 in Form eines mit einem Flansch ausgerüsteten Stutzen verbunden. Anstelle des Flansches kann auch ein Gewinde vorhanden sein oder irgendwelche andere Ausbildungen zur Verbindung des Verbindungsstückes 1 mit einem weiteren Bauteil.

## Ansprüche

1. Zum Verbinden mit einem starren Gegenstück bestimmte Endpartie eines biegsamen, mindestens ein metallisches Wellrohr (2) enthaltenden Metallschlauches (3), wobei ein äusserer, metallischer Pressring (5) auf die Endpartie aufgeschoben ist, so dass die darin aufgenommenen Wellen des Metallschlauches verformt sind, dadurch gekennzeichnet, dass das bei der Endpartie des Metallschlauches (3) gelegene Wellrohrende zwischen dem äusseren (4), plastisch verformten Pressring - (5) und einem dazu konzentrischen inneren, metallischen, plastisch verformten Pressring (5) derart festgeklemmt ist, dass die zwischen den Pressringen (4,5) gelegenen Wellen (6) des Wellrohrendes plastisch verformt zusammengepresst gehalten sind und die Endpartie des Metallschlauches (3) einen starren, rohrförmigen Schichtkörper bildet.

2. Endpartie nach Anspurch 2, dadurch gekennzeichnet, dass der Innendurchmesser ($D_1$)des inneren plastisch verformten Pressringes (5) gleich der Nennweite ($D_2$) des Metallschlauches (3) ist und dass der von der Stirnseite der Endpartie abgekehrte Ringendabschnitt (7) des äusseren, plastisch verformten Pressringes (4) trompetenförmig erweitert ausgebildet ist.

3. Endpartie nach Anspruch 1, dadurch gekennzeichnet, dass mindestens die Pressringe (4,5) mit einem damit axial fluchtenden, starren Rohrverbindungsstück (1) stoffschlüssig verbunden sind.

4. Endpartie nach Anspruch 1, mit mindestens einem ein Wellrohr (2) umgebenden metallischen Schutzschlauch (8), dadurch gekennzeichnet, dass der Schutzschlauch (8) zusammen mit dem Wellrohr (3) plastisch verformt zwischen dem äusseren und dem inneren (4) Pressring (5) festgeklemmt ist.

5. Endpartie nach Anspruch 1 und 4 dadurch gekennzeichnet, dass jede Schicht rohrförmigen, starren Schichtkörpers mit einem damit axial fluchtenden, starren Rohrverbindungsstück (1) stoffschlüssig verbunden ist.

6. Endpartie nach Anspruch 4, dadurch gekennzeichnet, dass der Schutzschlauch (8) ein metallgeflecht ist.

7. Endpartie nach Anspruch 1, dadurch gekennzeichnet, dass die zusammengepressten Wellen - (6) formund kraftschlüssig in die jeweils an ihnen anliegenden Mantelbereiche der Pressringe (4,5) eingreifen.

8. Endpartie nach Anspruch 4, dadurch gekennzeichnet, dass die Filamente des vorformten Abschnittes des Schutzschlauches (8) form-und kraftschlüssig in den an ihnen anliegenden Mantelbereich des äusseren Pressringes (4) und in die an ihnen anliegenden Bereiche der vorformten Wellen (6) eingreifen, und das die verformten Wellen (6) form-und kraftschlüssig in den an ihnen anliegenden Mantelbereich des inneren Pressringes (5) eingreifen.

**Fig.1**

**Fig.2**